(19) **Europäisches Patentamt / European Patent Office / Office européen des brevets**

(11) **EP 2 844 975 B1**

(12) # EUROPEAN PATENT SPECIFICATION

(45) Date of publication and mention
of the grant of the patent:
**01.02.2017 Bulletin 2017/05**

(51) Int Cl.:
**G01N 3/00** *(2006.01)*    **G01N 3/08** *(2006.01)*
**G01N 3/30** *(2006.01)*

(21) Application number: **11857969.7**

(22) Date of filing: **21.12.2011**

(86) International application number:
**PCT/RU2011/001009**

(87) International publication number:
**WO 2013/095177 (27.06.2013 Gazette 2013/26)**

(54) **METHOD OF DETERMINING RESISTANCE TO RUNNING DUCTILE FRACTURE FOR HIGH-STRENGTH PIPE STEELS**

VERFAHREN ZUR BESTIMMUNG DER WIDERSTANDSFÄHIGKEIT GEGENÜBER LAUFENDEM VERFORMUNGSBRUCH FÜR HOCHFESTE ROHRSTÄHLE

PROCÉDÉ DE DÉTERMINATION DE LA RÉSISTANCE À LA FRACTURE DUCTILE COURANTE POUR ACIERS DE TUBES À HAUTE RÉSISTANCE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**11.03.2015 Bulletin 2015/11**

(73) Proprietor: **Publichnoe Aktsionernoe Obschestvo "Gazprom"**
**Moscow 117997 (RU)**

(72) Inventors:
 • **PYSHMINTSEV, Igor Yuryevich**
  **GSP-7 117997 Moscow (RU)**
 • **ARABEI, Andrei Borisovich**
  **GSP-7 117997 Moscow (RU)**
 • **YAROSLAVTSEV, Sergei Ivanovich**
  **GSP-7 117997 Moscow (RU)**
 • **STRUIN, Aleksei Olegovich**
  **GSP-7 117997 Moscow (RU)**
 • **ESIEV, Taimuraz Suleimanovich**
  **GSP-7 117997 Moscow (RU)**
 • **NASYBULINA, Elena Ravkatovna**
  **GSP-7 117997 Moscow (RU)**
 • **VALOV, Maksim Anatolyevich**
  **GSP-7 117997 Moscow (RU)**
 • **MARTYNOVA, Natalya Alekseevna**
  **GSP-7 117997 Moscow (RU)**
 • **EGOROV, Vladimir, Aleksandrovich**
  **GSP-7 117997 Moscow (RU)**

(74) Representative: **Hermann, Felix**
**Boehmert & Boehmert**
**Anwaltspartnerschaft mbB**
**Patentanwälte Rechtsanwälte**
**Pettenkoferstrasse 20-22**
**80336 München (DE)**

(56) References cited:
 **US-A- 4 425 786**    **US-A- 5 770 791**
 **US-A1- 2006 005 606**

 • HASHEMI: "apportion of charpy energy in API 5L grade X70 pipeline steel", INTERNATIONAL JOURNAL OF PRESSURE VESSELS AND PIPING, vol. 85, 31 December 2008 (2008-12-31), pages 879-884, XP002682936,
 • HASHEMI: "correction factors for safe performance of API X65 pipeline steel", INTERNATIONAL JOURNAL OF PRESSURE VESSELS AND PIPING, vol. 86, 31 December 2009 (2009-12-31), pages 533-540, XP002682937,
 • TANGUY ET AL: "plastic and damage behaviour of a high strenght X100 pipeline steel: experiments and modelling", INTERNATIONAL JOUNRAL OF PRESSURE VESSELS AND PIPING, vol. 85, 31 December 2008 (2008-12-31), pages 322-335, XP002682938,
 • HORSLEY: "background to the use of the CTOA for prediction of dynamic fracture arrest in pipelines", ENGINEERING FRACTURE MECHANICS, vol. 70, 31 December 2003 (2003-12-31), pages 547-552, XP002682939,

- **SHTERENLIKHT: "a specimen for studying the resistance to ductile crack propagation in pipes", ENGINEERING FRACTURE MECHANICS, vol. 71, 31 December 2004 (2004-12-31), pages 1997-2013, XP002682940,**

**Description**

This invention pertains to the material testing sphere and may be utilized to determine resistance to running ductile fracture (RDF) for high-strength pipe steels of K65 grade or higher grades with the impact toughness exceeding 2.5 MJ/m$^2$.

It is known that resistance to RDF for pipe steels is determined using the Two-Curve Method (TCM) developed in the late 1960s - early 1970s at Battelle Institute or using its modifications (G. Wilkowski, D. Rudland, H. Xu, N. Sanderson. Effect of Grade on Ductile Fracture Arrest Criteria for Gas Pipelines // Proceedings of International Pipeline Conference 2006, September 25-29, Calgary, Alberta, Canada, IPC 2006-10350). This method takes impact toughness as a parameter specifying resistance to RDF. Impact toughness is measured on transverse Charpy V-notch specimens as provided by ISO 148-1:2006 or an equivalent standard. The impact toughness required to arrest RDF is determined by positions of two curves - a gas decompression curve and a fracture velocity curve. The point of intersection between the two curves shows the minimum impact toughness required to arrest RDF.

TCM is a semi-empirical method based on a series of full-scale experiments with K46 - K54 grade pipes. Currently, it is being used to determine the impact toughness required for RDF arrest in steels with a relatively low toughness index. For the use of this method in testing new high-strength pipe steels a number of approaches were suggested, notably, a correction factor was introduced to compensate toughness indices obtained through TCM. These approaches are being developed now and have not been extensively used yet. TCM doesn't allow determining resistance to RDF for high-strength pipe steels with impact toughness exceeding 2.5 MJ/m$^2$.

As a prototype of TCM, the most proximal engineering solution is a method developed by the European Pipeline Research Group (ERPG) to determine resistance to RDF for pipe steels. This method is cited in the International Standard ISO 3183:2007 "Petroleum and Natural Gas Industries - Steel Pipe for Pipeline Transportation Systems", Annex G (pp. 99-102).

Resistance to RDF is evaluated by the impact energy value obtained during impact bending tests on transverse Charpy specimens made of the pipe parent material in the original (unstrained) condition. Impact energy is determined at a temperature equivalent to the gas pipeline minimum operating temperature.

The impact energy required to arrest RDF is calculated according to the formula:

$$Kv = C_3 \times \sigma_h^2 \times \left(\frac{Dt}{2}\right)^{1/3} \qquad , \qquad (1)$$

where:

Kv - impact energy obtained during tests on transverse Charpy specimens (full size), J;
$\sigma_h$ - calculated membrane stress, N/m$^2$;
D - external pipe diameter, m;
t - pipe wall thickness, m;
$C_3$ - correction factor equaling to 3.57x10$^{-5}$ in calculations according to the SI system.

If the actual impact energy of the pipe parent metal exceeds the value calculated according to the formula (1), the pipe exhibits sufficient resistance to RDF. In case the actual value of the impact energy is lower than the value calculated according to the formula (1), the pipe is not capable of arresting RDF. The method is valid for pipes with the diameter $\leq$ 1,430 mm and wall thickness $\leq$ 25.4 mm designed for the operating pressure of 8 MPa (inclusive) and impact energy of up to 100 J (1.25 MJ/m$^2$).

It is erroneous to use the ERPG method for determining resistance to RDF for modern high-strength pipes as the major parameters of such pipes are beyond the application boundaries of this method. Modern high-strength pipes are designed to withstand operating pressures reaching 11.8 MPa (inclusive), have the wall thickness of up to 33.4 mm, whereby the impact energy of the pipe parent metal exceeds 200 J (impact toughness is over 2.5 MJ/m$^2$). There is no correlation between the results of impact bending tests in the original (unstrained) condition and resistance to RDF.

Sayyed H. Hashemi, "Apportion of Charpy energy in API 5L grade X70 pipeline steel", International Journal of Pressure Vessels and Piping, Volume 85, Issue 12, December 2008, Pages 879-884 notes that conventional Charpy based failure models for gas transportation pipelines recommend the minimum fracture energy for safe performance of these structures. In recent years however, full-scale burst experiments have shown that such models cannot fully guarantee the safety of higher grade pipeline steels. One possible reason for this discrepancy, which is further investigated byyy Hashemi in this article, is that Charpy energy inherently contains both fracture and non-fracture related energy. To separate this, Hashemi suggests using energy partitioning analysis. First, the overall fracture energy of X70 steel is measured experimentally on an instrumented Charpy rig. Next, the measured energy is divided into fracture initiation and propagation parts using load-displacement data. It appeared from test results that a significant amount of energy was consumed in non-fracture related processes. From this, correction factors are suggested for possible use in current industry failure models.

Sayyed H. Hashemi, "Correction factors for safe performance of API X65 pipeline steel", International Journal of Pressure Vessels and Piping, Volume 86, Issue 8, August 2009, Pages 533-540, outlines that prediction of required Charpy energy for fracture arrest is vital for safe performance of gas transportation pipelines. To refine the existing failure models, different empirical adjustments have been proposed in recent years. Hashemi derives similar correction factors from fracture information of instrumented Charpy impact tests on API X65 steel.

B. Tanguy et al., "Plastic and damage behaviour of a high strength X100 pipeline steel: Experiments and modelling", International Journal of Pressure Vessels and Piping, Volume 85, Issue 5, May 2008, Pages 322-335, aims to develop a constitutive model integrating anisotropic behaviour and ductile damage for a X100 pipeline steel. The model is based on a set of experiments on various smooth, notched and cracked specimens and on a careful fractographic examination of the damage mechanisms. The model is based on an extension of the Gurson-Tvergaard-Needleman model which includes plastic anisotropy. Provided brittle delamination is not triggered, the developed model can accurately describe the plastic and damage behaviour of the material. The model is then used as a numerical tool to investigate the effect of plastic anisotropy and delamination on ductile crack extension. It is shown in particular that it is not possible to obtain a unified description of rupture properties for notched and cracked specimens tested along different directions without accounting for plastic anisotropy.

David J Horsley, "Background to the use of CTOA for prediction of dynamic ductile fracture arrest in pipelines", Volume 70, Issues 3-4, February-March 2003, Pages 547-552 notes that the use of crack tip opening angle (CTOA) for the prediction of ductile fracture propagation and arrest phenomena in gas filled pipelines is the subject of study by the gas pipeline industry. The newly found interest is driven by the desire to develop a prediction methodology that is fundamentally based on fracture mechanics principles. This has been fuelled by proposed new pipelines using high strength steel (Grade 550 MPa, Grade 690 MPa and possibly greater) combined with higher operating pressures. This combination of steel strength, operating pressure, and possibly richer gas mixtures, has been shown to be beyond the calibration range for current ductile arrest prediction models. Therefore, a means to characterise pipeline steel's resistance, under these extreme conditions, is required-CTOA looks promising.

The invention meets the following engineering task: to determine, relying on impact bending tests with standard transverse specimens, the value of provisional plastic strain indicating the start of intense impact toughness decrease specific for resistance to RDF in high-strength pipe steels with impact toughness exceeding 2.5 MJ/m.

The task is met in the following way. The way of determining resistance to RDF in pipe steels mostly with impact toughness exceeding 2.5 MJ/m$^2$ during the process including the preparation of a pipe blank, manufacture of several transverse specimens, performance of impact bending tests and subsequent determination of resistance to RDF using the impact toughness value also includes the following operations pursuant to the invention: several blanks are extracted from the pipe and subjected to provisional plastic strain by compression that doesn't exceed 45 %. Then at least three transverse specimens are manufactured from each blank and tested for impact bending. Subsequently, the correlation between relative impact toughness and provisional plastic strain is determined, while resistance to RDF is determined using the provisional plastic strain value indicating the start of intense impact toughness decrease.

Full-scale pneumatic tests of pipes (specifically of K65 grade) have tentatively confirmed that RDF is accompanied by the plastic strain zone formation in front of the crack tip. A ductile fracture propagates in the provisionally strained metal with properties differing from its initial state. The potential to arrest a fracture is determined by the extent of plastic strain preceding fracturing as well as by the size of the plastic strain zone near the crack. The combined values show specific energy intensity of the crack propagation for particular parameters of a gas pipeline and temperature. Provisional straining of blanks (e.g. by compression) prior to specimens manufacture provides for simulating the process of plastic strain in front of the crack tip. Impact bending testing of transverse specimens after provisional plastic strain enables to determine the actual level of steel impact toughness at the moment of fracturing.

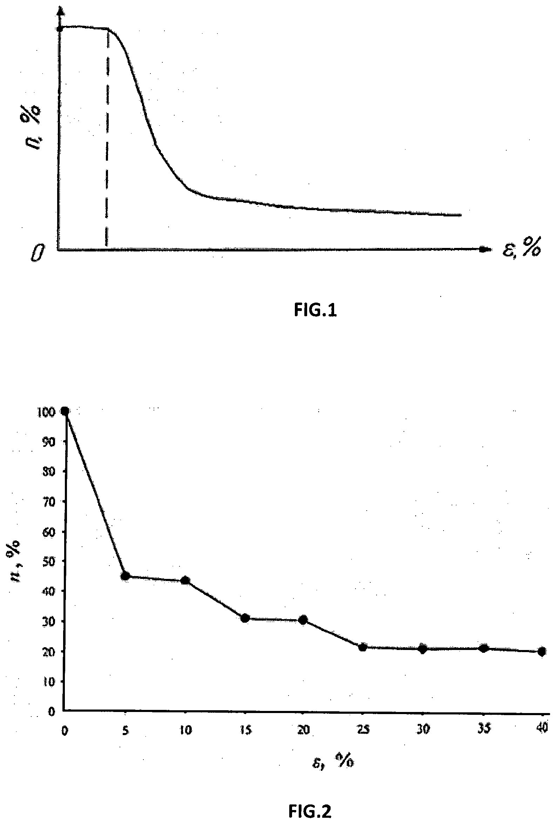

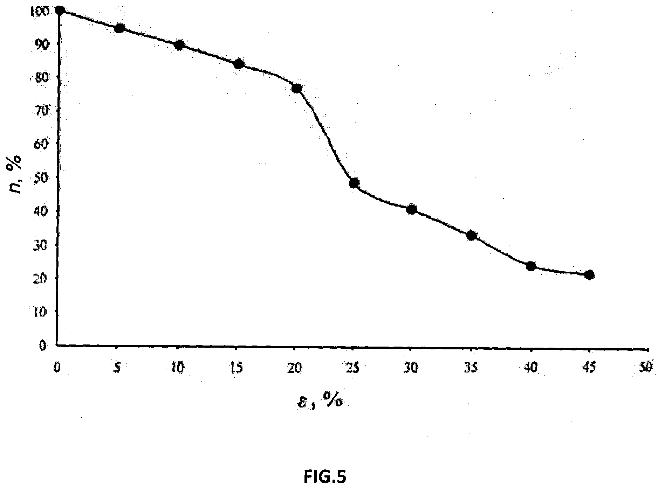

The invention is shown in figures, where Fig. 1 depicts an exemplary curve of the correlation between relative impact toughness and provisional plastic strain. Fig. 2 -5 depict actual results of impact bending tests with transverse specimens, notably, the correlation between specific impact toughness and provisional plastic strain for K65 grade steels having impact toughness above 2.5 MJ/m$^2$.

To determine steel resistance to RDF, several sets of transverse specimens are prepared for impact bending tests. They are manufactured from blanks preliminary strained by compression reaching different straining levels.

To obtain high values of uniform strain, several consecutive processes of blank straining are acceptable. Blank strain is carried out at temperatures ranging from +10°C to +35°C. The relative strain rate should be from 0.0005 s$^{-1}$ to 0.003 s$^{-1}$.

The blanks may be provisionally strained by tension, though in this case it is not possible to obtain high degrees of strain as tension of high-strength pipe steels results in uniform strain that doesn't exceed 10 %.

Variation in blank thickness after the straining process should not be more than 0.5 % of the initial blank thickness or 0.2 mm, whichever is less.

The maximum value of provisional plastic strain by compression in blanks is 45 % as experimental research of pipes after full-scale pneumatic tests demonstrated that maximum wall thinning in the area of plastic strain doesn't exceed this value. Besides, it is too difficult in terms of equipment to obtain greater values of strain.

Charpy specimens which are transverse to the pipe axis are made of the blanks. The specimens orientation is specified by the trajectory of RDF propagation in a gas trunkline. Impact bending tests with specimens are carried out in compliance with GOST 9454-78 or an equivalent standard. The impact bending testing temperature is indicated in the technical regulations for mill or pipe products. If no such prescriptions are made, the tests are carried out at a temperature equivalent to the minimum pipe operating temperature.

Steel resistance to RDF is determined by the curve of the relative impact toughness value rate as a function of the provisional plastic strain value. The curve is plotted in coordinates of the plastic strain value (horizontal axis) and the relative impact toughness value (vertical axis) (Fig. 1). The relative value of impact toughness is calculated as a relationship between impact toughness after provisional plastic strain and impact toughness in the unstrained condition. With the help of the curve the provisional plastic strain $\varepsilon_H$ is determined, which manifests the start of intense impact toughness decrease. The value of the provisional plastic strain which indicates the start of intense impact toughness decrease is calculated according to the formula:

$$dn/d\varepsilon = A, \qquad\qquad (2)$$

where:

$n$    - relative impact toughness value, %;
$\varepsilon$    - provisional plastic strain value, %.

The A value has been determined experimentally based on the analysis of K65 or higher grade pipe steels tests and varies between -4 and -2.

The value of provisional plastic strain indicating the start of intense impact toughness decrease is the minimum value of provisional plastic strain providing the condition (2) accomplishment.

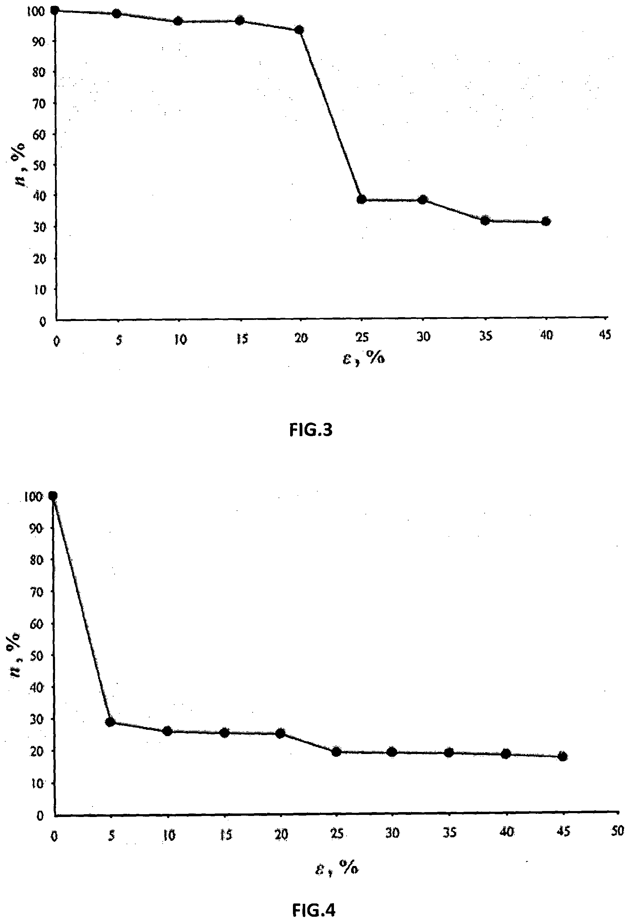

Resistance to RDF is estimated by the value of provisional plastic strain indicating the start of intense impact toughness decrease. Pipe steels retaining impact toughness under higher values of strain show higher resistance to RDF. Full-scale pipe pneumatic tests have demonstrated that steels with impact toughness exceeding 2.5 MJ/m$^2$ and the value of provisional plastic strain $\varepsilon_H \geq 20$ % (Fig. 2, 4) show enough resistance to RDF.

The proposed method is implemented in the following way. The blanks of high-strength pipe steels are selected and subjected to provisional plastic strain of different intensity, e.g. compression at temperatures in the range of +10 to +35°C. After that, several sets of transverse specimens are manufactured to undergo impact bending tests in compliance with GOST 9454-78 or an equivalent standard. Impact toughness is determined, the relationship between relative value of impact toughness and the value of the provisional plastic strain is plotted and used to determine the value of the preliminary plastic strain indicating the start of intense impact toughness decrease.

Example:

The method has been used to determine resistance to RDF for K65 pipes subjected to full-scale pneumatic tests. The pipes of steels designated as No. 1 and No. 3 showed RDF propagated to more than three tested pipes. Oppositely, pipes No. 2 and No. 4 showed local ductile fracture of the length not exceeding three tested pipes.

To determine resistance to RDF, 9 sets of transverse specimens for impact bending tests (3 specimens per set) of the 10x10 mm section were made of four K65 pipes (parent metal). Blanks for the first set of each pipe specimens were not strained, the other sets of samples were provisionally strained by compression at temperatures from +10 to +35°C with the strain spacing of 5 %. All specimens were tested under GOST 9454-78 at -20°C according to the requirements of product technical regulations. Correlations between the relative impact toughness value and the provisional plastic strain value of four steels under consideration are shown in Fig. 2-5. Fig. 2 shows the correlation of the impact toughness value and the provisional plastic strain value for steel No. 1, Fig. 3 - for steel No. 2, Fig. 4 - for steel No. 3 and Fig. 5 - for steel No. 4.

Resistance to RDF was evaluated using the provisional plastic strain value indicating the start of intense impact toughness decrease. This value was determined as the minimum provisional plastic strain providing the condition (2) fulfillment. The condition (2) was checked graphically.

The provisional plastic strain values indicating the start of intense impact toughness decrease as well as the impact toughness level in the "original" state of four steels under consideration are shown in the Table below.

Table - Provisional plastic strain values indicating the start of intense impact toughness decrease for steels under consideration

| Designation | Steel No. 1 | Steel No. 2 | Steel No. 3 | Steel No. 4 |
|---|---|---|---|---|
| $\varepsilon_H$, % | below 5 | 20 | below 5 | 20 |
| Original impact toughness, MJ/m$^2$ | 3.35 | 3.65 | 3.45 | 3.65 |

As shown in the Table, steels under consideration display various resistances to RDF at almost equal values of the "original" impact toughness. Impact toughness in steels No. 1 and 3 decreases with an insignificant level of provisional plastic strain. Provisional plastic strain indicating the start of intense impact toughness decrease is less than 5 % for these steels. Oppositely, impact toughness of steels No. 2 and 4 is almost stable up to 20 % of provisional plastic strain that is the value indicating the start of intense impact toughness decrease. Thus, the parent metal of pipes No. 2 and 4 features higher resistance to RDF versus the parent metal of pipes No. 1 and 3 that was proved by the full-scale pneumatic tests with these pipes.

The proposed method allows for accurately determining resistance to RDF for high-strength pipe steels of K65 or higher grades with impact toughness over 2.5 MJ/m$^2$ as well as comparing the quality of several similar materials from various manufacturers.

## Claims

1.    A method of determining resistance to running ductile fracture (RDF) for high-strength pipe steels mostly with impact toughness exceeding 2.5 *MJ/m*$^2$ includes the preparation of a pipe blank, manufacture of transverse specimens, performance of impact bending tests and subsequent determination of steel resistance to RDF using impact toughness value,

   **characterized in that**
   several blanks are extracted from one pipe and subjected to provisional straining by compression that doesn't exceed 45 %, then at least three transverse specimens are manufactured from each blank and tested for impact bending and subsequently, the correlation between the relative impact toughness and provisional plastic strain values is determined, while resistance to running ductile fracture is determined using the provisional plastic strain value indicating the start of impact toughness decrease;

   wherein the provisional plastic strain value indicating the start of impact toughness decrease is determined according to the formula:

$$dn/d\varepsilon \;=\; A$$

   where:

   *n* is a relative impact toughness value determined as the correlation between impact toughness after provisional plastic strain and impact toughness in the unstrained condition given in %;
   $\varepsilon$ is a provisional plastic strain value given in %.

2.    The method of claim 1, wherein the *A* value ranges between -4 to -2.

## Patentansprüche

1.    Verfahren zum Bestimmen der Beständigkeit gegenüber fortlaufendem Verformungsbruch (RDF) für hochfeste Rohrstähle, die überwiegend eine Schlagzähigkeit von mehr als 2,5 MJ/m$^2$ aufweisen, das die Vorbereitung eines Rohrrohlings, die Herstellung von Querproben, die Durchführung der Schlagbiegeversuche und die anschließende Bestimmung der Stahlbeständigkeit gegenüber RDF unter Verwendung des Schlagzähigkeitswertes umfasst,
   **dadurch gekennzeichnet, dass**
   mehrere Rohlinge aus einem Rohr entnommen und einer einstweiligen Verformung durch Kompression unterworfen werden, die 45 % nicht übersteigt, dann werden mindestens drei Querproben von jedem Rohling gefertigt und auf Schlagbiegung geprüft und nachfolgend wird die Korrelation zwischen der relativen Schlagzähigkeit und den einstweiligen plastischen Verformungswerten bestimmt, während die Beständigkeit gegenüber fortlaufenden Verformungsbruch unter Verwendung des einstweiligen plastischen Verformungswertes bestimmt wird, welcher den Beginn der intensiven Schlagzähigkeits-Abnahme anzeigt.

wobei der vorläufige plastische Verformungswert, welcher den Beginn der intensiven Schlagzähigkeits-Abnahme anzeigt, gemäß der Formel:

$$dn/d\varepsilon \ = \ A$$

bestimmt wird, wobei:

n der relative Schlagzähigkeitswert ist, der als die Korrelation zwischen Schlagzähigkeit nach der einstweiligen plastischen Verformung und der Schlagzähigkeit im unverformten Zustand, angegeben in %, bestimmt wird;
$\varepsilon$ ein einstweiliger plastischer Verformungswert ist, angegeben in %.

2. Verfahren nach Anspruch 1, wobei der A-Wert im Bereich zwischen -4 und -2 liegt.

**Revendications**

1. Procédé de détermination d'une résistance à une fracture ductile courante (RDF) pour des aciers de tuyau à haute résistance surtout avec une résistance aux chocs dépassant 2,5 MJ/m$^2$ comprenant la préparation d'une découpe de tuyau, la fabrication d'échantillons transversaux, l'exécution d'essais de flexion aux chocs et par la suite la détermination de la résistance de l'acier à une RDF en utilisant une valeur de résistance aux chocs,
**caractérisé en ce que**
plusieurs découpes sont extraites d'un tuyau et soumises à une tension provisoire par compression qui ne dépasse pas 45 %, ensuite au moins trois échantillons transversaux sont fabriqués à partir de chaque découpe et testés quant à la flexion aux chocs et, par la suite, la corrélation entre les valeurs de résistance aux chocs relative et de déformation plastique provisoire est déterminée, tandis qu'une résistance à une fracture ductile courante est déterminée en utilisant la valeur de déformation plastique provisoire indiquant le début de la diminution de la résistance aux chocs ;
dans lequel la valeur de déformation plastique provisoire indiquant le début de la diminution de la résistance aux chocs est déterminée conformément à la formule :

$$dn/d\varepsilon \ = \ A$$

où :

n est une valeur de résistance aux chocs relative déterminée comme étant la corrélation entre la résistance aux chocs après une déformation plastique provisoire et la résistance aux chocs dans la condition sans contrainte donnée en % ;
$\varepsilon$ est une valeur de déformation plastique provisoire donnée en %.

2. Procédé selon la revendication 1, dans lequel la plage de la valeur A est entre -4 et -2.

FIG.1

FIG.2

FIG.3

FIG.4

FIG.5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **G. WILKOWSKI ; D. RUDLAND ; H. XU ; N. SANDERSON.** Effect of Grade on Ductile Fracture Arrest Criteria for Gas Pipelines. *Proceedings of International Pipeline Conference,* 25 September 2006
- **SAYYED H. HASHEMI.** Apportion of Charpy energy in API 5L grade X70 pipeline steel. *International Journal of Pressure Vessels and Piping,* December 2008, vol. 85 (12), 879-884
- **SAYYED H. HASHEMI.** Correction factors for safe performance of API X65 pipeline steel. *International Journal of Pressure Vessels and Piping,* August 2009, vol. 86 (8), 533-540
- **B. TANGUY et al.** Plastic and damage behaviour of a high strength X100 pipeline steel: Experiments and modelling. *International Journal of Pressure Vessels and Piping,* May 2008, vol. 85 (5), 322-335
- **DAVID J HORSLEY.** *Background to the use of CTOA for prediction of dynamic ductile fracture arrest in pipelines,* February 2003, vol. 70 (3-4), 547-552